# EUROPÄISCHE PATENTANMELDUNG

(11) **EP 1 240 981 A2**
(43) Veröffentlichungstag der Anmeldung: **18.09.2002**
(21) Anmeldenummer: 02005693.3
(22) Anmeldetag: 13.03.2002
(51) Int. Cl.: B25B 27/10, F16L 33/00

(54) **Kunststoffrohr und Einsatzteil zur radialen Aufweitung der Rohrwandung**

(30) Priorität: 14.03.2001 DE 20104340 U
(71) Anmelder: Uponor Innovation AB, 513 81 Fristad (SE)
(72) Erfinder: Riesselmann, Franz-Josef, 49393 Lohne (DE); Störmann, Michael, 48629 Metelen (DE)
(74) Vertreter: Hilleringmann, Jochen, Dipl.-Ing.

(57) **Zusammenfassung**

Das Kunststoffrohr ist mit einem Rohrstück (10) versehen, das eine Wandung (11) und ein Ende (12) aufweist, wobei das Ende (12) des Rohrstücks (10) durch radiales Dehnen der Wandung (11) aufgeweitet ist. Ferner weist das Kunststoffrohr ein in das aufgeweitete Rohrstückende (12) des Rohrstücks (10) eingesetztes Einsatzteil (26) zur Aufrechterhaltung der Aufweitung des Rohrstückendes (12) auf, wobei zum Manipulieren des Einsatzteils (26) ein Handhabungsorgan (32) vorgesehen ist.

## Beschreibung

Die Erfindung betrifft ein konfektioniertes Kunststoffrohr, das zur Verbindung mit einem Fitting vorbereitet ist.

Neben der Verpressung von Kunststoffrohren auf den Stützhülsen von Anschlusskörpern mittels Metall-Presshülsen existieren im Stand der Technik auch Verbindungssysteme, bei denen das Kunststoffrohr zusammen mit einer dieses umgebenden Kunststoff-Presshülse aufgeweitet und auf eine Stützhülse eines insbesondere aus Kunststoff bestehenden Anschlusskörpers aufgeschoben werden. Aufgrund des Memory-Effekts des Kunststoffmaterials des Rohres und der Presshülse ziehen sich beide radial fest gegen die Stützhülse.

Diese Kunststoff-Verbindungstechnik hat sich in der Praxis grundsätzlich bewährt. Allerdings erfordert sie vor Ort den Montageschritt des Überstülpens der Presshülse auf das Ende des anzuschließenden Rohres und dessen Aufweitung mit einem Aufweitwerkzeug. Dies ist insbesondere bei vorkonfektionierbaren Rohrstücken für Geräte, Baugruppen, wie z.B. Heizkörper nachteilig.

Der Erfindung liegt die Aufgabe zu Grunde, ein Kunststoffrohr für die Verbindung mit einem Fitting zu schaffen, die über eine vereinfachte Vor-Ort-Montage verfügt.

Zur Lösung dieser Aufgabe wird mit der Erfindung ein Kunststoffrohr vorgeschlagen, das versehen ist mit
- einem Rohrstück, das eine Wandung und ein Ende aufweist, wobei das Ende des Rohrstücks durch radiales Dehnen der Wandung aufgeweitet ist, und
- einem in das aufgeweitete Rohrstückende des Rohrstücks eingesetztes Einsatzteil zur Aufrechterhaltung der Aufweitung des Rohrstückendes, wobei zum Manipulieren des Einsatzteils ein Handhabungsorgan vorgesehen ist.

Mit der Erfindung wird also ein an mindestens einem seiner Enden aufgeweitetes Kunststoffrohrstück geschaffen, dessen mindestens eines aufgeweitetes Ende durch ein Einsatzteil aufrechterhalten ist, wobei das Einsatzteil ein Handhabungsorgan zur manuellen Manipulation oder zur Manipulation mittels eines Werkzeuges aufweist. Durch dieses Handhabungsorgan kann das Einsatzteil aus dem aufgeweiteten Rohrende entfernt werden.

Das aufgeweitete Rohrende des erfindungsgemäßen Kunststoffrohres ist vorzugsweise mit einer Kunststoff-Presshülse versehen, die ebenfalls aufgeweitet ist und im nicht aufgeweiteten Zustand einen kleineren Durchmesser als der Außendurchmesser des Rohrendes in dessen ebenfalls nicht aufgeweiteten Zustands aufweist. Durch eine Voraufweitung wird zunächst die Kunststoff-Presshülse auf das nicht aufgeweitete Rohrende aufgeschoben. Anschließend werden beide, also Rohrende und Kunststoff-Presshülse, gemeinsam aufgeweitet, um das aufgeweitete Rohrende zu bilden. In dieses aufgeweitete Rohrende wird dann insbesondere werkseitig das Einsatzteil eingesetzt.

Alternativ zur zuvor geschilderten Vorgehensweise kann man auch die Kunststoff-Presshülse direkt so weit aufweiten, dass sie auf das ebenfalls aufgeweitete Rohrende aufgeschoben wird.

Mit dem erfindungsgemäßen Kunststoffrohr gemäß der vorstehend beschriebenen bevorzugten Ausgestaltung lässt sich z.B. eine Verbindung des Kunststoffrohres mit einem Fitting realisieren, die versehen ist mit
- einem Fittingkörper, der einen Rohranschlussbereich aufweist, auf den ein einen Außendurchmesser aufweisendes Rohrende in einem radial aufgeweiteten Zustand aufschiebbar ist, und
- einer Kunststoff-Presshülse mit einem Innendurchmesser, die auf dem anzuschließenden Rohrende angeordnet und zusammen mit diesem radial aufweitbar ist, wobei
- die Kunststoff-Presshülse in ihrem nicht aufgeweiteten Zustand einen kleineren Innendurchmesser aufweist als der Außendurchmesser des Rohrendes im nicht aufgeweiteten Zustand und
- die Kunststoff-Presshülse in einem radial nach innen vorgespannten Zustand auf dem nicht aufgeweiteten Rohrende angeordnet und damit axial fixiert ist.

Die beiden zuvor beschriebenen Vorgehensweisen können entweder werkseitig oder unmittelbar vor der Montage erfolgen. So kann beispielsweise der Monteur die anzuschließenden Rohrstücke in der oben beschriebenen Weise vorbereiten, um diese Rohrstücke anschließend zu verarbeiten.

Bei dem Einsatzteil handelt es sich beispielsweise um ein konusförmiges oder ein zylindrisches Teil. Alternativ kann auch ein Element aus einem Elastomer eingesetzt werden.

Besonders vorteilhaft ist es, wenn das Einsatzteil als Schraubenfester ausgebildet ist, dessen wendelförmig verlaufender Draht zweckmäßigerweise auch gleichzeitig zur Ausbildung eines Handhabungsorgans entsprechend geformt ist. Dies geschieht zweckmäßigerweise dadurch, dass das eine Drahtende im wesentlichen um eine quer zur Achse der Schraubenfeder verlaufende Achse zur Bildung einer Schlaufe (sogenanntes Auge) gewickelt ist. Derartig ausgebildete Federenden findet man beispielsweise bei im Handel erhältlichen Schraubenzugfedern, um nämlich diese Schraubenzugfedern an ihren Enden an Halterungen der mit den Federn zu verbindenden Elemente anzubringen.

Bei dem Handhabungsorgan eines konusförmigen, zylindrischen oder elastomeren Einsatzteils kann es sich beispielsweise um einen Überstand handeln, um den das Einsatzteil aus dem aufgeweiteten Rohrende übersteht.

Schließlich ist es auch möglich, das Einsatzteil kolabierbar auszubilden. Als eine Ausgestaltung der Kolabierbarkeit des Einsatzteils ist es beispielsweise denkbar, zwei teilzylindrische Elemente (vorzugsweise weniger als 180°) durch eine Verstrebung miteinander zu verbinden, die dann gezielt zerstört werden kann, so dass die beiden im wesentlichen teilzylindrischen Elemente aus dem aufgeweiteten Rohrende herausgenommen werden können.

Die beiden zuvor genannten teilzylindrischen Elemente können beispielsweise auch über eine Kniehebelfunktion miteinander verbunden sein, wobei durch gezieltes Bewegen der Kniehebel über einen Totpunkt hinweg die teilzylindrischen Elemente aufeinander zu bewegt werden können und damit das gesamte Einsatzteil aus dem aufgeweiteten Rohrende herausgenommen werden kann.

Die mit dem erfindungsgemäß vorbehandelten Kunststoffrohr realisierbare Verbindung verfügt über eine radial voraufgeweitete Kunststoff-Presshülse, die werksseitig in diesem Zustand auf das Anschlussende des Rohres aufgeschoben ist, wobei sich dabei das Kunststoffrohr in seinen Normalzustand, d.h. nicht aufgeweiteten Zustand, befindet. Infolge des Memory-Effekts des Kunststoffmaterials der Presshülse schrumpft diese auf das Rohrende und ist damit radial einwärts vorgespannt. Hierdurch ergibt sich eine Axialsicherung der Presshülse auf dem Rohrende, weshalb die Presshülse ihre Lage bei auf das Rohr einwirkenden mechanischen Kräften, wie sie z.B. beim Transport auftreten können, beibehalten kann. Die Montage vor Ort gestaltet sich insoweit vereinfacht, als der Vormontageschritt des Aufschiebens der Presshülse auf das Rohr entfällt. Durch die Vorspannung der Presshülse wird schließlich auch eine verbesserte Verpressung des Rohrendes auf dem Rohranschlussbereich des Fittingkörpers erzielt, da die radial einwärts wirkenden Kräfte bei radial aufgeweitetem Rohrende und Presshülse wegen deren Vorspannung erhöht sind.

Die Presshülse und das Kunststoffrohr bestehen vorzugsweise aus einem Thermoplasten und insbesondere aus einem Polyolefin-Material. Dieses Kunststoffmaterial kann (chemisch oder strahlen-)vernetzt oder unvernetzt sein. Insbesondere geeignet ist PEX.

Nachfolgend wird die Erfindung anhand der Zeichnung näher erläutert. Im einzelnen zeigen:
- Fig. 1: zur Verdeutlichung den Unterschied zwischen dem Innendurchmesser der Presshülse und dem Außendurchmesser des Rohres, wenn sich beide in ihrem entspannten, also nicht aufgeweitetem Zustand befinden,
- Fig. 2: die radiale Aufweitung der Presshülse und ihr Aufschieben auf das Rohrende,
- Fig. 3: die Aufweitung von Presshülse und Rohrende mit Einsatzteil zur Aufrechterhaltung des aufgeweiteten Rohrendes mit Presshülse,
- Fig. 4: das aufgeweitete Rohrende nach Entfernen des Einsatzteils kurz vor dem Aufschieben auf den Fitting und
- Fig. 5: die Verbindung von Rohr und Fitting.

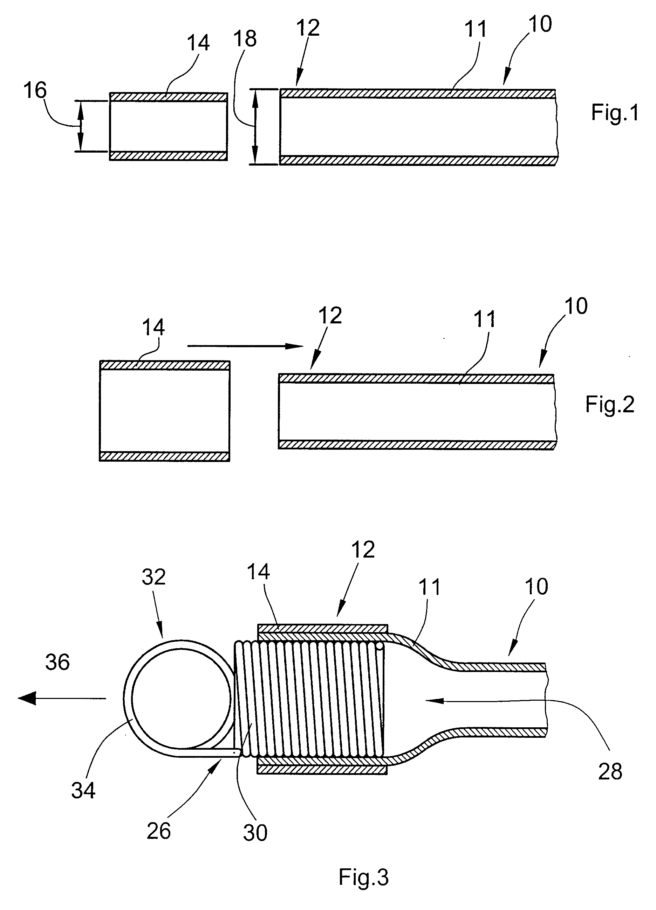

Fig. 1 zeigt die Einzelteile der erfindungsgemäßen rohrseitigen Elemente einer Kunststoffrohr-Fitting-Verbindung. Bei diesen Elementen handelt es sich um das anzuschließende Kunststoffrohr 10 mit Wandung 11 sowie Rohrende 12 und eine PEX-Kunststoff-Presshülse 14. Im entspannten Zustand ist der Innendurchmesser 16 der Presshülse 14 kleiner als der Außendurchmesser 18 des Rohrendes 12, auf das die Presshülse 14 aufgeschoben werden soll. Hierzu ist eine Aufweitung der Presshülse 14 erforderlich, wie es in Fig. 2 dargestellt ist. Nach dem Aufschieben der aufgeweiteten Presshülse 14 schrumpft diese wieder, so dass sie von außen gegen das Rohrende 12 drückt und auf diese Weise radial einwärts vorgespannt auf dem Rohrende 12 angeordnet ist. Hierdurch ist eine Transportsicherung sowie Vormontage der Presshülse 14 gegeben, was insbesondere bei vorkonfektionierten Rohren von Vorteil ist.

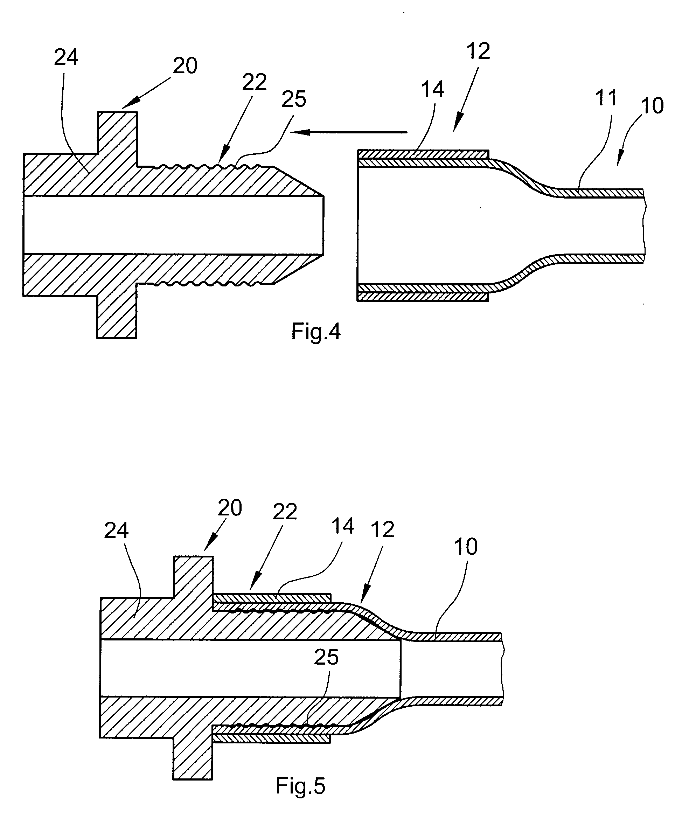

Zum Anschluss an einen Fitting 20 wird das Rohrende 12 und die vorgespannte Presshülse 14 radial aufgeweitet (Fig. 4), um auf den Anschlussbereich 22 des Fittingkörpers 24 des Fittings 20 axial aufgeschoben werden zu können. Der Anschlussbereich 22 wird in diesem Ausführungsbeispiel von einer abstehenden profilierten Stützhülse 25 des Fittings 20 gebildet, der einen Dichtungs-O-Ring aufweisen kann.

Infolge des Memory-Effekts des Kunststoffmaterials des Rohres 10 und der Presshülse 14 schrumpfen beide axial und drücken dadurch von außen gegen die Stützhülse 25 (Fig. 5).

In Fig. 3 ist gezeigt, wie das aufgeweitete Rohrende durch ein Einsatzteil 26 in seinem aufgeweiteten Zustand aufrechterhalten wird. Bei dem Einsatzteil 26 handelt es sich in diesem Ausführungsbeispiel um eine Schraubenfeder 28, die einen wendelförmig gewickelten Draht 30 aufweist. Zur Bildung eines Handhabungsorgans 32 ist dieser Draht 30 an seinem einen Ende ringförmig aufgewickelt, wobei die Ebene dieses Rings 34 rechtwinklig zur Wickelrichtung des Drahts 30 zur Bildung der Schraubenfeder 28 verläuft.

Durch Ziehen an dem Ring 34 in Richtung des Pfeils 36 lässt sich die Schraubenfeder 28 aus dem aufgeweiteten Rohrende 12 herausziehen. Dieser Vorgang wird dadurch erleichtert, dass die Schraubenfeder 28 bei Zugbelastungen, wie sie durch Ziehen am Ring 34 entstehen, sich bezüglich ihres Außendurchmessers verringert. Damit lässt sich die Schraubenfeder 28 bequem aus dem aufgeweiteten Rohrende 12 entfernen.

## Patentansprüche

1. Kunststoffrohr mit
- einem Rohrstück (10), das eine Wandung (11) und ein Ende (12) aufweist, wobei das Ende (12) des Rohrstücks (10) durch radiales Dehnen der Wandung (11) aufgeweitet ist, und
- einem in das aufgeweitete Rohrstückende (12) des Rohrstücks (10) eingesetztes Einsatzteil (26) zur Aufrechterhaltung der Aufweitung des Rohrstückendes (12), wobei zum Manipulieren des Einsatzteils (26) ein Handhabungsorgan (32) vorgesehen ist.

2. Kunststoffrohr nach Anspruch 1, **dadurch gekennzeichnet, dass** das Einsatzteil (26) konusförmig ist.

3. Kunststoffrohr nach Anspruch 1, **dadurch gekennzeichnet, dass** das Einsatzteil (26) zylindrisch ist.

4. Kunststoffrohr nach Anspruch 1, **dadurch gekennzeichnet, dass** das Einsatzteil (26) ein Elastomerkörper ist.

5. Kunststoffrohr nach Anspruch 1, **dadurch gekennzeichnet, dass** das Einsatzteil (26) eine Schraubenfeder (28) mit einem wendelförmig gebogenen Draht (30) ist.

6. Kunststoffrohr nach Anspruch 5, **dadurch gekennzeichnet, dass** das Handhabungsorgan (32) als im wesentlichen quer zur Wickelrichtung der Schraubenfeder (28) gewickeltes Drahtende ausgebildet ist.

7. Kunststoffrohr nach einem der Ansprüche 1 bis 4, **dadurch gekennzeichnet, dass** das Einsatzteil (26) kolabierbar ist.

8. Kunststoffrohr nach einem der Ansprüche 1 bis 7, ferner **gekennzeichnet durch** eine **durch** radiale Dehnung aufgeweitete Kunststoff-Presshülse (14) zum Aufpressen des aufgeweiteten Rohrstückendes (12) auf den Stützkörper eines Fittings, wobei die Presshülse (14) im nicht aufgeweiteten Zustand einen kleineren Innendurchmesser (16) als der Außendurchmesser (18) des Rohrstückendes (12) des Rohrstücks (10) im nicht aufgeweiteten Zustand aufweist.

9. Kunststoffrohr nach einem der Ansprüche 1 bis 8, **dadurch gekennzeichnet, dass** die Presshülse (14) und/oder das Rohrstück (10) ein thermoplastisches Kunststoffmaterial, insbesondere vernetztes oder unvernetztes Polyolefin-Material, und vorzugsweise vernetztes PE aufweist.
